# EUROPEAN PATENT APPLICATION

(11) **EP 4 471 596 A1**
(43) Date of publication of application: **04.12.2024**
(21) Application number: 22931901.7
(22) Date of filing: 29.12.2022
(51) Int. Cl.: G06F 9/54, G06F 9/50

(54) **COMMUNICATION METHOD, ELECTRONIC DEVICE AND READABLE STORAGE MEDIUM**

(30) Priority: 15.03.2022 CN 202210251711
(71) Applicant: Huawei Technologies Co., Ltd., Shenzhen, Guangdong 518129 (CN)
(72) Inventor: YANG, Hongyang, Shenzhen, Guangdong 518129 (CN); LI, Renqiang, Shenzhen, Guangdong 518129 (CN); XIE, Xiaolong, Shenzhen, Guangdong 518129 (CN)
(74) Representative: Körber, Martin Hans
(86) International application number: PCT/CN2022/143404
(87) International publication number: WO 2023/173896

(57) **Abstract**

This application relates to the field of computer technologies, and specifically, to a communication method, an electronic device, and a readable storage medium. The method is applied to an electronic device on which at least two operating systems are installed, a second operating system includes an execution environment management module, and the execution environment management module can communicate with a first operating system and the second operating system. The method includes: The execution environment management module obtains a service invocation request of the first operating system, where the service invocation request is used to request to invoke a first service of a first application running in the second operating system; the execution environment management module obtains, in response to the service invocation request, a first storage path of a first execution entity corresponding to the first service; and the execution environment management module obtains the first execution entity based on the first storage path, and runs the first execution entity. According to the communication method provided in embodiments of this application, a scheduling procedure can be omitted, a delay problem caused by scheduling can be improved, and cross-domain communication performance inside the electronic device can be improved.

## Description

This application claims priority to Chinese Patent Application No. 202210251711.0, filed with the China National Intellectual Property Administration on March 15, 2022 and entitled "COMMUNICATION METHOD, ELECTRONIC DEVICE, AND READABLE STORAGE MEDIUM", which is incorporated herein by reference in its entirety.

### TECHNICAL FIELD

The present invention relates to the field of computer technologies, and specifically, to a communication method, an electronic device, and a readable storage medium.

### BACKGROUND

With the development of computer technologies, virtualization technologies are increasingly widely used. A plurality of virtual machines may run on one physical host (referred to as a host for short hereinafter, namely, host) by using the virtualization technologies. In this way, resource utilization and allocation flexibility can be improved. On an electronic device to which the virtualization technologies are applied, cross-domain communication is frequently performed between a host and a virtual machine and between virtual machines. For example, some virtual machine applications (Virtual Machine Application, VM APP) running on the virtual machine may need to invoke some services provided by a host application (Host Application, Host APP) running on the host. For another example, a virtual driver in the virtual machine needs to drive a physical device on the host to execute a corresponding task or the like. In a cross-domain communication procedure, an end that initiates an invocation request may be referred to as a client, and the invocation request initiated by the client may be, for example, requesting to invoke a service or a physical device on the host; and an end that receives and responds to the invocation request is referred to as a server, and the server may provide, for example, the service requested to be invoked by the invocation request, or may run the physical device requested by the invocation request for use.

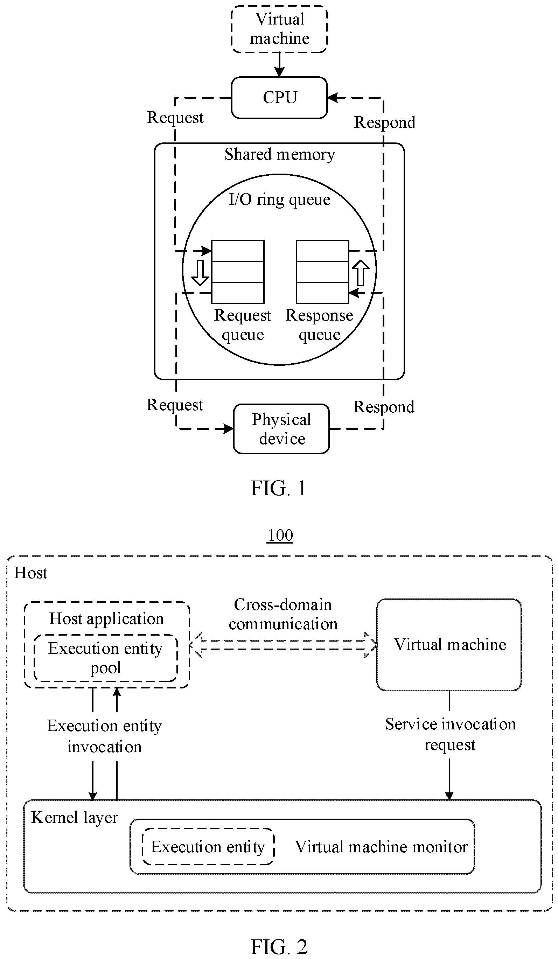

However, in a current cross-domain communication solution, for a cross-domain invocation request initiated by a client, a plurality of times of scheduling are usually performed to finally obtain a response from a server and a response result feedback. For example, refer to an I/O (Input/Output) ring queue communication solution based on a virtio protocol shown in FIG. 1. A CPU may place, into a request queue, an I/O request delivered by an application (namely, a client) running on a virtual machine, and notify a physical device (device, namely, a server) on a host. This procedure relates to a first time of scheduling. After receiving the notification from the CPU and completing processing of the I/O request, the physical device places a processing result as an I/O response into a response queue, and notifies the CPU to continue processing. This procedure relates to a second time of scheduling. The CPU obtains the I/O response from the response queue and notifies the application running on the virtual machine to wake up the application, so that the application continues to run. This procedure relates to a third time of scheduling. In such a communication procedure, a main reason for generating the foregoing plurality of times of scheduling is that the CPU needs to be allocated by a scheduler to different processes for use, and in some other cross-domain communication procedures, more times of scheduling than that shown in FIG. 1 may be related to.

It may be understood that, for an operating system of an electronic device, each time of scheduling relates to allocating, by a scheduler of the system, execution time to an object (for example, the CPU notified in the first time of scheduling, the physical device notified in the second time of scheduling, or the application notified in the third time of scheduling) notified in the scheduling. In this case, the execution time may need to be allocated by the scheduler to another process or task with a higher priority. Therefore, each time of scheduling may generate a delay with unspecified time. Such a plurality of times of scheduling may cause a long delay of cross-domain communication, resulting in poor user experience.

### SUMMARY

Embodiments of this application provide a communication method, an electronic device, and a readable storage medium, to resolve a problem of a long delay in a cross-domain invocation request response procedure due to a plurality of times of scheduling in a current cross-domain communication solution. A scheduling procedure is omitted, scheduling time is eliminated, and a problem of a long delay that may be caused by corresponding scheduling can be improved. In addition, an internal message reporting procedure of the electronic device can be further simplified. This further helps improve performance of cross-domain communication between an operating system running on a host and a virtual machine that are in the electronic device, and improve user experience on the electronic device.

According to a first aspect, an embodiment of this application provides a communication method, applied to an electronic device, where a first operating system and a second operating system are installed on the electronic device, the second operating system includes an execution environment management module, and the execution environment management module can communicate with the first operating system and the second operating system. The method includes: The execution environment management module obtains a service invocation request of the first operating system, where the service invocation request is used to request to invoke a first service of a first application running in the second operating system; the execution environment management module obtains, in response to the service invocation request, a first storage path of a first execution entity corresponding to the first service; and the execution environment management module obtains the first execution entity based on the first storage path, and runs the first execution entity.

If the first operating system installed on the electronic device initiates the service invocation request, the execution environment management module that can directly communicate with the two operating systems installed on the electronic device may respond to the service invocation request, and the execution environment management module may run the first execution entity corresponding to the requested first service, and provide the first service in respond to the service invocation request of the first operating system. The first service may be, for example, a function service provided by any application installed in the second operating system, and the first execution entity may correspond to a function service provided by an application. It may be understood that the first execution entity may be an executable file stored in the second operating system, or may be an execution environment. This is not limited herein.

In a possible implementation of the first aspect, the method further includes: The first operating system includes a virtual machine, and the execution environment management module includes a virtual machine monitor.

The first operating system may be, for example, a virtual machine installed on the electronic device in a virtualization manner, and the execution environment management module may be, for example, a virtual machine monitor that can communicate with virtual machines installed on the electronic device.

In a possible implementation of the first aspect, the method further includes: The second operating system is a primary operating system of the electronic device, and the execution environment management module is located at a kernel layer of the second operating system.

The second operating system may be, for example, the primary operating system running on the electronic device. It may be understood that a virtual machine may be installed on the primary operating system run by the electronic device, that is, the first operating system may be installed on the second operating system.

In a possible implementation of the first aspect, the electronic device includes a trap instruction, and that the execution environment management module obtains a service invocation request of the first operating system includes: The first operating system runs the trap instruction, to enable the service invocation request to trap into the kernel layer of the second operating system; and the execution environment management module obtains the service invocation request that is trapped into the kernel layer.

The service invocation request initiated in the first operating system may be trapped into the kernel layer of the second operating system (namely, the primary operating system) by running the preset trap instruction. The trap instruction may be, for example, an HVC instruction, the instruction can enable a service invocation request on a virtual machine to trap into a kernel layer of an operating system running on a host, and a virtual machine monitor (for example, a hypervisor) located at the kernel layer may intercept the service invocation request that is trapped into the kernel layer according to the HVC instruction. For details, refer to related descriptions in the following embodiments. Details are not described herein again.

In a possible implementation of the first aspect, that the execution environment management module obtains a service invocation request of the first operating system further includes: The first operating system sends an interrupt instruction to the execution environment management module when running the trap instruction; and the execution environment management module interrupts, according to the received interrupt instruction, a task that is being executed, and switches to processing the obtained service invocation request.

When executing the trap instruction, the first operating system (for example, the virtual machine) may notify the virtual machine monitor located at the kernel layer of the second operating system (namely, the primary operating system) of the interrupt. The interrupt may be, for example, a message channel notification interrupt registered by the virtual machine with the virtual machine monitor in advance, that is, the virtual machine may send, in advance, an ID of a message channel in which an execution entity corresponding to a requested service is located to the virtual machine monitor for monitoring. For details, refer to related descriptions in the following embodiments. Details are not described herein again.

In a possible implementation of the first aspect, the execution environment management module stores a first correspondence between the first service and a first storage path, and that the execution environment management module obtains, in response to the service invocation request, a first storage path of a first execution entity corresponding to the first service includes: The execution environment management module obtains, according to the first correspondence, the first storage path of the first execution entity corresponding to the first service.

The execution environment management module (for example, the virtual machine monitor) may pre-store storage paths of execution entities corresponding to services. For example, when the first application is installed in the second operating system, the first application may create the first execution entity corresponding to the first service, and store the first execution entity in memory space allocated by the second operating system to the first application, for example, in an execution entity pool of the first application.

In a possible implementation of the first aspect, the first correspondence is stored in the execution environment management module in the following manner: When the first application is installed, the first application creates the first execution entity corresponding to the first service; the first application provides the execution environment management module with the first storage path of the first execution entity and a second correspondence between the first service and the first execution entity; and the execution environment management module determines and stores, based on the first storage path of the first execution entity and according to the second correspondence, and the first correspondence between the first service and the first storage path.

The first application may provide, in advance, the virtual machine monitor with identification information of an execution entity pool in which the created first execution entity is located and a storage path of the first execution entity in the corresponding execution entity pool, for example, provide the virtual machine monitor with the storage path of the first execution entity by registering a message channel with the virtual machine monitor, that is, the first storage path. After obtaining the first execution entity corresponding to the first service and the first storage path that are provided by the first application, the virtual machine monitor may establish a correspondence between the first service and the first storage path, so that the virtual machine monitor may conveniently find the first storage path corresponding to the first service when necessary, and obtain, through the first storage path, the first execution entity that can provide the first service.

In a possible implementation of the first aspect, the electronic device includes first memory space for storing the first execution entity, and the first memory space is obtained in the following manner: When the first application is installed at an application layer of the second operating system, the first application requests the first memory space from the second operating system; and the second operating system allocates the first memory space to the first application in response to the created request.

When the first application is installed, the first application may request memory space for storing execution entities corresponding to function services of the first application, that is, the first memory space, from the second operating system (namely, the primary operating system). The primary operating system run by the electronic device may allocate the first memory space to the first application in response to the request of the first application. The first memory space is an execution entity pool for storing the execution entities of the first application. The second operating system (namely, the primary operating system) may be, for example, an operating system running on a host of the electronic device, and the first application is a host application running in the operating system of the host. For details, refer to related descriptions in the following embodiments. Details are not described herein again.

In a possible implementation of the first aspect, the first execution entity includes at least register information corresponding to a process that runs the first application, context data of the process, an executable code segment address corresponding to the first service, and a stack address.

According to a second aspect, an embodiment of this application provides an electronic device, including one or more processors and one or more memories, where the one or more memories store one or more programs, and when the one or more programs are executed by the one or more processors, the electronic device is enabled to perform the foregoing communication method.

According to a third aspect, an embodiment of this application provides a computer-readable storage medium, where the storage medium stores instructions, and when the instructions are executed on a computer, the computer is enabled to perform the foregoing communication method.

According to a fourth aspect, an embodiment of this application provides a computer program product, including a computer program/instructions, where the computer program/instructions is/are used to implement the foregoing communication method when being executed by a processor.

### BRIEF DESCRIPTION OF DRAWINGS

FIG. 1 is a diagram of an implementation procedure of a current cross-domain communication solution;
FIG. 2 is a diagram of an implementation procedure of a communication method according to an embodiment of this application;
FIG. 3a is a diagram of a hardware structure of an electronic device according to an embodiment of this application;
FIG. 3b is a diagram of an ARM^{™} V8 processor architecture according to an embodiment of this application;
FIG. 3c is a diagram of a software structure of a mobile phone according to an embodiment of this application;
FIG. 4a and FIG. 4b are a diagram of an interaction procedure of a communication method according to an embodiment of this application;
FIG. 5 is a diagram of a switching procedure of switching running space of an execution entity in a virtual machine monitor 30 according to an embodiment of this application;
FIG. 6a is a diagram of another procedure of implementing cross-domain communication based on an existing inter-process communication mechanism of a migration thread model according to an embodiment of this application;
FIG. 6b is a diagram of another procedure in which a virtual machine 20 implements, via a virtual machine monitor 30, cross-domain communication with an operating system running on a host 10 according to an embodiment of this application;
FIG. 7a is a diagram of a cross-domain communication preparation procedure executed by an ARB core running in an operating system of a host 10 in an implementation procedure of another communication method according to an embodiment of this application;
FIG. 7b is a diagram of a cross-domain communication preparation procedure executed by a virtual GPU driver in a virtual machine 20 in an implementation procedure of another communication method according to an embodiment of this application;
FIG. 7c is a diagram of an implementation procedure in which an ARB core running in an operating system of a host 10, a virtual GPU driver in a virtual machine 20, and a virtual machine monitor 30 separately execute steps in an implementation procedure of another communication method according to an embodiment of this application;
FIG. 8a is a diagram of a frame rate curve obtained by performing a frame rate test in a procedure of running a Riptide GP game on a mobile phone 100 to which a communication method provided in an embodiment of this application is not applied according to an embodiment of this application;
FIG. 8b is a diagram of a frame rate curve obtained by performing a frame rate test in a procedure of running a Riptide GP game on a mobile phone 100 to which a communication method provided in an embodiment of this application is applied according to an embodiment of this application;
FIG. 9 is a comparison table of test data of time consumed by a mobile phone 100 to respond to start/stop signal data initiated by a virtual GPU driver according to an embodiment of this application; and
FIG. 10 is a diagram of an architecture of an operating system installed on a mobile phone 100 according to an embodiment of this application.

### DESCRIPTION OF EMBODIMENTS

For ease of understanding technical solutions of this application, the following first describes some computer terms used in embodiments of this application.

A virtual machine monitor (hypervisor), also referred to as a virtual machine manager (virtual machine monitor, VMM), is a management module, in a virtualization system, configured to perform allocation, scheduling, and the like on an operating system running on a host and physical resources such as a central processing unit (Central Processing Unit, CPU), a memory, storage, and a network between a plurality of virtual machines (Virtual Machine, VM) running in the operating system, and the virtual machine monitor is usually disposed at a kernel layer of the operating system.

An interrupt (interrupt) means that when an exception occurs during running of a computer and host intervention is required, the computer can automatically stop a running program and start to process a program with a new situation, and the computer returns to the suspended program and resumes running of the suspended program after processing of the program is completed.

A trap (trap) instruction, also referred to as a self-trapping instruction or an access management instruction, is in a computer operating system and is used to implement that a process running in a user mode invokes a kernel program of the operating system, that is, when the running process needs to request a kernel layer of the operating system to serve the process, the process may be controlled to execute one trap instruction to cause a special exception. In other words, the process running in the user mode may initiate an invocation to the kernel layer of the operating system by executing the trap instruction. Such invocation may be invoking a service provided by the kernel layer, or may be invoking a driver or a management module at the kernel layer. This is not limited herein. In embodiments of this application, the process in the user mode may invoke, for example, according to a hypervisor call (Hypervisor Call, HVC) instruction, a virtual machine monitor at the kernel layer to serve the process.

A process is a basic unit for allocating resources (such as a CPU and a memory). When an application is running, a system creates a process, allocates resources to the process, and then places the process in a process ready queue. When the process is selected by a process scheduler, the process scheduler allocates CPU time to the process, and the application really starts to run. The process scheduler is configured to schedule and manage running of a process. An important objective of the process scheduler is to effectively allocate the CPU time. When some process tasks conflict with each other, the process scheduler not only minimizes response time for a critical real-time task, but also maximizes overall CPU utilization, to provide better user experience.

A thread is an execution path, a minimum unit for program execution, an execution flow of a process, and a basic unit for CPU scheduling and task assignment. One process may include a plurality of threads, the threads share all resources of the process, and each thread has a stack and a local variable of the thread.

An execution entity includes register information corresponding to a process, context data of the process, an executable code segment address, a stack address, and the like. The execution entity may be an executable file that can run in an operating system, or may be an execution environment that can run a code segment corresponding to a corresponding service, or the like. Details are not described herein.

Inter-process communication (Inter-process Communication, IPC) refers to some technologies or methods for transmitting data or signals between at least two processes or threads.

A migration thread model is an inter-process communication technology. This model allows a thread to move from one task to another. During IPC, as a part of normal functions, a kernel layer does not block running of an invoker thread, but enables the invoker thread to execute code of an invoked party. The entire movement procedure does not wake up the invoker process, and the invoked party serves only as a code provider. Because the kernel layer does not need to perform complete context switching, scheduling and thread priority switching are not triggered either.

To resolve a problem of a long delay in a cross-domain invocation request response procedure due to a plurality of times of scheduling in a current cross-domain communication solution, embodiments of this application provide a communication method, applied to an electronic device on which at least two operating systems are installed. An operating system running on a host is a primary operating system, and another operating system may run on the primary operating system. For example, the another operating system running on the primary operating system may be a virtual machine installed in a virtualization manner. This is not limited herein.

Specifically, different from an existing manner in which a CPU responds to a service resource invocation request by switching a system process, in this method, an execution environment management module (for example, a virtual machine monitor) that can connect an operating system and a virtual machine is used to invoke execution entities corresponding to corresponding function services of some applications on a host, and run the execution entities to respond to a service invocation request initiated on a virtual machine. In some embodiments, for example, in some electronic devices that use an ARM^{™} processor architecture, a virtual machine monitor is located at a kernel layer of a system. Therefore, a service invocation request initiated on a virtual machine may be trapped into the kernel layer by using a trap mechanism (for example, by using a trap instruction), so that the service invocation request is obtained by the virtual machine monitor. In addition, when an application is installed on the host, the application may create an execution entity corresponding to a corresponding function service, and provide storage paths of execution entities for the virtual machine monitor, so that the virtual machine monitor queries and invokes a corresponding execution entity.

It may be understood that the primary operating system running on the host may include but is not limited to an Android operating system, HarmonyOS, iOS, and the like. In some other embodiments, for example, in an electronic device that uses another processor architecture, a virtual machine monitor or another execution environment management module may alternatively be located at another layer such as a framework layer or a hardware abstraction layer in a system architecture of a corresponding electronic device. Correspondingly, another operating system (for example, a virtual machine) installed on the primary operating system running on the electronic device may transmit a request by using a related mechanism that can enable the corresponding service invocation request to trap into these system layers, so that virtual machine monitors located at these system layers obtain and respond to the service invocation request.

When the virtual machine needs to invoke a host service provided by an application running on the host, the virtual machine may initiate a corresponding service invocation request, and enable the initiated service invocation request to trap into the kernel layer by executing a trap instruction. In this case, the virtual machine monitor may obtain the service invocation request that is trapped into the kernel layer, and search for a storage path of an execution entity corresponding to a corresponding service, to obtain the execution entity. Then, the virtual machine monitor may run the execution entity to provide the requested service, to respond to the service invocation request of the virtual machine, and complete a cross-domain communication procedure between the virtual machine and the host.

Refer to FIG. 2. In some embodiments, for example, in some electronic devices 100 that use the ARM^{™} processor architecture, an operating system running on a host may directly respond, by using a virtual machine monitor located at a kernel layer, to a service invocation request initiated by a virtual machine running on the system, to complete a cross-domain communication procedure between the virtual machine and the host (operating system).

Specifically, as shown in FIG. 2, when the virtual machine running on the electronic device 100 needs to invoke a function service of a host application, a service invocation request initiated on the virtual machine may be trapped into the kernel layer of the operating system running on the host.

The virtual machine monitor located at the kernel layer can obtain the service invocation request, and invoke, based on a storage path of a corresponding execution entity provided by the host application to which the service requested by the service invocation request belongs, the execution entity corresponding to the requested service from the corresponding host application. Execution entities corresponding to function services provided by host applications may be stored in an execution entity pool. The execution entity pool may be created when the host applications are installed, and is used as memory space for storing and managing the execution entities corresponding to the function services. Before cross-domain communication is performed, the host application may provide the virtual machine monitor located at the kernel layer with storage paths of the execution entities in the execution entity pool. For example, the host application may provide the virtual machine monitor with the storage paths of the execution entities by registering a message channel. This is not limited herein.

After obtaining the corresponding execution entity, the virtual machine monitor may directly run the execution entity to provide the requested service to the virtual machine, to respond to the service invocation request of the virtual machine.

It may be understood that the storage paths of the execution entities that can be invoked in the virtual machine monitor one-to-one correspond to corresponding function services in applications to which the execution entities belong. In this way, the virtual machine monitor may accurately invoke, based on the storage paths of the execution entities, the execution entity corresponding to the requested service. When the execution entities are run, the virtual machine monitor that runs the execution entities, an application layer of the operating system, or the like may switch to a program entry of a corresponding service of a corresponding application process to execute a corresponding program segment to provide an invoked service.

It can be learned that the communication method provided in embodiments of this application shown in FIG. 2 only relates to a case in which the virtual machine enables the service invocation request to trap into the virtual machine monitor in a kernel mode by executing the trap instruction, that is, switching from a user mode to the kernel mode in a same process, and does not relate to process switching. Therefore, scheduling does not exist. In other words, in the communication method provided in embodiments of this application, a scheduling procedure is omitted, scheduling time is eliminated, and a problem of a long delay that may be caused by corresponding scheduling can also be resolved. In addition, according to the communication method provided in embodiments of this application, a message reporting procedure is also simplified. This improves cross-domain communication performance between the operating system running on the host in the electronic device 100 and the virtual machine.

It may be understood that the cross-domain communication solution provided in embodiments of this application may also be applicable to other cross-domain communication scenarios in some other embodiments. This is not limited herein.

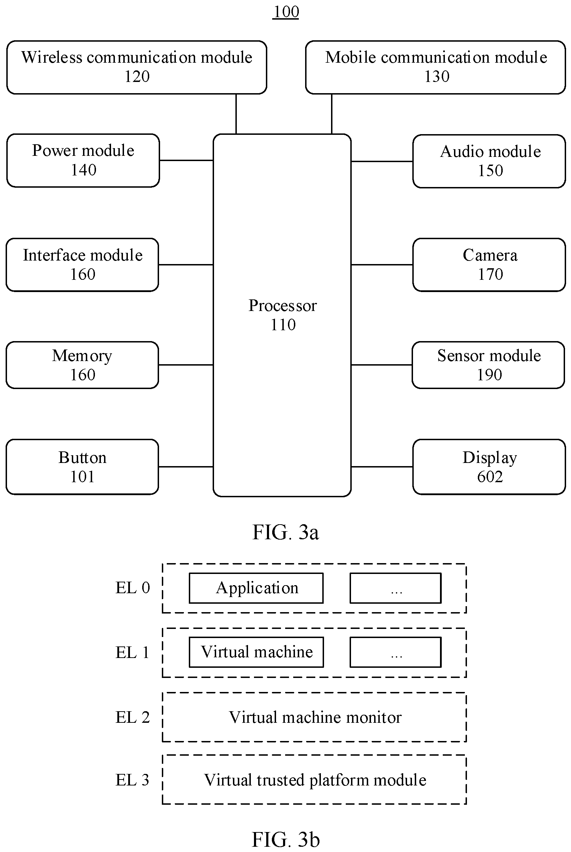

FIG. 3a is a diagram of a hardware structure of an electronic device 100 according to an embodiment of this application.

As shown in FIG. 3a, the electronic device 100 may include a processor 110, a wireless communication module 120, a mobile communication module 130, a power module 140, an audio module 150, an interface module 160, a camera 170, a memory 180, a sensor module 190, a button 101, a display 102, and the like.

It may be understood that the structure in this embodiment of the present invention does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units, for example, may include a processing module or a processing circuit of a central processing unit CPU (Central Processing Unit), a graphics processing unit GPU (Graphics Processing Unit), a digital signal processor DSP, a micro control unit MCU (Micro-programmed Control Unit), an AI (Artificial Intelligence, artificial intelligence) processor, a programmable logic device FPGA (Field Programmable Gate Array). Different processing units may be independent components, or may be integrated into one or more processors. A storage unit may be disposed in the processor 110, and is configured to store instructions and data. In some embodiments, the storage unit in the processor 110 may be, for example, a cache 180. In this embodiment of this application, the processor 110 may be, for example, an ARM^{™} V8 processor. This is not limited herein. For a schematic ARM^{™} V8 processor architecture, refer to FIG. 3b and related descriptions below. Details are not described herein again.

The wireless communication module 120 may include an antenna, and receive/send an electromagnetic wave through the antenna. The wireless communication module 120 may provide a solution that is applied to the electronic device 100 and that is for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The electronic device 100 can communicate with a network and another device by using wireless communication technologies.

The mobile communication module 130 may include but is not limited to an antenna, a power amplifier, a filter, an LNA (Low noise amplify, low noise amplifier), and the like. The mobile communication module 130 may provide a solution that is applied to the electronic device 100 and that is for wireless communication such as 2G/3G/4G/5G. The mobile communication module 130 may receive an electromagnetic wave through the antenna, perform processing such as filtering or amplification on the received electromagnetic wave, and transmit the electromagnetic wave to a modem processor for demodulation. The mobile communication module 130 may further amplify a signal modulated by the modem processor, and convert the signal into an electromagnetic wave for radiation through the antenna. In some embodiments, at least some functional modules of the mobile communication module 130 may be disposed in the processor 110. In some embodiments, at least some functional modules of the mobile communication module 130 and at least some modules of the processor 110 may be disposed in a same component. The wireless communication technologies may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time division code division multiple access (time-division code division multiple access, TD-SCDMA), long term evolution (long term evolution, LTE), Bluetooth (Bluetooth, BT), a global navigation satellite system (global navigation satellite system, GNSS), a wireless local area network (wireless local area network, WLAN), near field communication (near field communication, NFC), frequency modulation (frequency modulation, FM) and/or field communication (field communication, NFC), an infrared (infrared, IR) technology, and the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite-based augmentation system (satellite-based augmentation system, SBAS).

In some embodiments, the mobile communication module 130 and the wireless communication module 120 that are of the electronic device 100 may alternatively be located in a same module.

The power module 140 may include a power supply, a power management component, and the like. The power supply may be a battery. The power management component is configured to manage charging of the power supply and power supplying to another module performed by the power supply. In some embodiments, the power management component includes a charging management module and a power management module. The charging management module is configured to receive charging input from a charger. The power management module is configured to connect to the power supply, the charging management module, and the processor 110. The power management module receives input from the power supply and/or the charging management module, and supplies power to the processor 110, the display 102, the camera 170, the wireless communication module 120, and the like.

The audio module 150 is configured to convert digital audio information into an analog audio signal for output, or convert an analog audio input into a digital audio signal. The audio module 150 may be further configured to encode/decode an audio signal. In some embodiments, the audio module 150 may be disposed in the processor 110, or some functional modules of the audio module 150 are disposed in the processor 110. In some embodiments, the audio module 150 may include a speaker, an earpiece, a microphone, and a headset interface.

The interface module 160 includes an external memory interface, a universal serial bus (universal serial bus, USB) interface, a subscriber identity module (subscriber identification module, SIM) card interface, and the like. The external memory interface may be configured to connect to an external memory card, for example, a Micro SD card, to expand a storage capability of the electronic device 100. The external memory card communicates with the processor 110 via the external memory interface, to implement a data storage function. The universal serial bus interface is configured for communication between the electronic device 100 and another electronic device. The subscriber identity module card interface is configured to communicate with a SIM card installed in the electronic device 100, for example, read a phone number stored in the SIM card, or write a phone number into the SIM card.

The camera 170 is configured to capture a static image or a video. An optical image of an object is generated through a lens, and is projected onto a photosensitive element. The photosensitive element converts an optical signal into an electrical signal, and then transmits the electrical signal to an ISP (Image Signal Processing, image signal processor) to convert the electrical signal into a digital image signal. The electronic device 100 may implement a photographing function via the ISP, the camera 170, a video codec, the GPU (Graphic Processing Unit, graphics processing unit), the display 102, an application processor, and the like.

The sensor module 190 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like.

The display 102 is configured to display a man-machine interaction interface, an image, a video, and the like. The display 102 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

In some embodiments, the electronic device 100 further includes the button 101, a motor, an indicator, and the like. Buttons 101 may include a volume button, a power-on/power-off button, and the like. The motor is configured to enable the electronic device 100 to generate vibration effect, for example, generate vibration when the electronic device 100 of a user is called, to prompt the user to answer a call from the electronic device 100. The indicator may include a laser indicator, a radio frequency indicator, an LED indicator, and the like.

It may be understood that the electronic device 100 to which the communication method provided in this embodiment of this application is applicable may include but is not limited to a mobile phone, a tablet computer, a desktop computer, a laptop computer, a handheld computer, a netbook, an augmented reality (augmented reality, AR)/virtual reality (virtual reality, VR) device, a smart television, a wearable device such as a smart watch, a server, a mobile email device, a head unit, a portable game console, a portable music player, a reader device, a television set embedded with or coupled to one or more processors, or other electronic devices that can access a network. The following describes various aspects of specific implementation of the communication method provided in embodiments of this application by using the mobile phone 100 as an example.

FIG. 3b is a diagram of an ARM^{™} V8 processor architecture according to an embodiment of this application.

As shown in FIG. 3b, an exception level (exception level, EL) is applied to the ARM^{™} V8 processor architecture, and running phases are divided into an EL 0 to an EL 3. An application (application, APP) runs at the EL 0, a virtual machine (VM) runs at an EL 1, a virtual machine monitor runs at an EL 2, and a virtual trusted platform module (virtual trusted platform module, VTPM) configured to protect sensitive data and a VTPM management device may run at the EL 3.

In this embodiment of this application, the virtual machine monitor running at the EL 2 may obtain a service invocation request that is trapped into a kernel layer, and obtain, from an application that provides a requested service and that is in an operating system running in the ARM^{™} V8, an execution entity corresponding to the service, and run the execution entity, to provide the requested service for a virtual machine that initiates the corresponding service invocation request. This implements a cross-domain communication procedure between a host and the virtual machine. In this communication procedure, because the virtual machine monitor runs at the EL 2, the obtained service invocation request, corresponding service data provided for the virtual machine, and the like can also be prevented from being obtained by a malicious program. This further ensures security of the communication procedure.

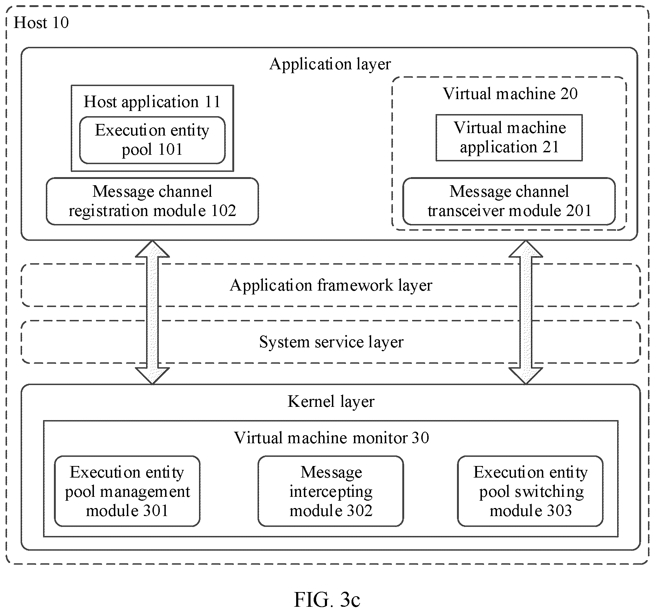

FIG. 3c is a diagram of a software structure of a mobile phone 100 according to an embodiment of this application.

As shown in FIG. 3c, the communication method provided in embodiments of this application relates to interaction between an application layer and a kernel layer (kernel layer) in an operating system installed on the mobile phone 100. It may be understood that in some embodiments, an application framework layer and a system service layer that are disposed between the application layer and the kernel layer, or an Android runtime and system library (not shown in FIG. 3c) may be further included in the operating system installed on the mobile phone 100. This is not limited herein.

An example of a specific system architecture of an electronic device such as the mobile phone 100 is described in detail below with reference to a diagram of a system architecture. Details are not described herein again.

As shown in FIG. 3c, in an operating system running on the host 10 of the mobile phone 100, the application layer includes a host application 11 and a virtual machine 20, and a virtual machine application 21 may run on the virtual machine 20. The kernel layer of the operating system includes a virtual machine monitor 30.

When the host application 11 is installed, the host application 11 may create an execution entity pool 101. Execution entities managed by the execution entity pool 101 are configured to provide various function services of the host application 11, to respond to an invocation request initiated by the virtual machine 20 for a host service.

The application layer further includes a message channel registration module 102 that provides the host application 11 with a service for registering a message channel. The message channel registration module 102 is configured to provide the host application 11 with a service interface for registering the message channel. The host application 11 provides, through a message channel registered by the message channel registration module 102, the virtual machine monitor 30 with storage paths of the execution entities stored in the execution entity pool of the host application 11, so that the virtual machine monitor 30 invokes the execution entities that correspond to corresponding services and that are in the execution entity pool 101 created by the host application 11.

As shown in FIG. 3c, a message channel transceiver module 201 may be disposed in the virtual machine 20, and is configured to: provide the virtual machine 20 with a transceiver interface for a service invocation request, and register a notification interrupt with the virtual machine monitor at the kernel layer, to notify the virtual machine monitor at the kernel layer of an interrupt when the virtual machine 20 executes a trap instruction. For example, the virtual machine application 21 running on the virtual machine 20 may register a message channel notification interrupt with the virtual machine kernel layer via the message channel transceiver module 201, to receive the message channel notification interrupt injected into the virtual machine 20 by the virtual machine monitor 30. When the virtual machine 20 executes the trap instruction, the service invocation request is trapped into the virtual machine monitor 30 at the kernel layer, and the virtual machine monitor 30 starts to process the service invocation request initiated by the virtual machine 20.

As shown in FIG. 3c, the virtual machine monitor 30 located at the kernel layer (also referred to as a kernel layer in some embodiments) of the operating system includes an execution entity pool management module 301, a message intercepting module 302, and an execution entity pool switching module 303.

The execution entity pool management module 301 is configured to manage an ID of a message channel registered by the host application 11 via the message channel registration module 102 and information about the execution entity pool 101, and message channels correspond to execution entities in the registered execution entity pool 101. The execution entity pool management module 301 may further invoke, run, and the like, based on the ID of the message channel, the execution entities that correspond to the message channels and that are in the execution entity pool 101. In other words, the execution entity pool management module 301 may also be understood as being configured to manage information about execution entity pools 101 registered by host applications 11 with the virtual machine monitor 30, information about IDs of message channels registered by the host applications 11 with the virtual machine monitor 30, and the like. The IDs of the message channels registered by the host applications 11 may be used to access/invoke execution entities in corresponding execution entity pools 101. It may be understood that, in this embodiment of this application, the execution entity pool management module 301 may include a message channel list used to manage the message channels registered by the host applications 11. For example, the execution entity pool management module 301 may be used to manage the IDs of the message channels and information about execution entity pools 101 in which execution entities corresponding to the message channels are located. Details are described in the following implementation steps, but are not described herein.

The message intercepting module 302 is configured to intercept the service invocation request initiated by the virtual machine 20. The service invocation request may be, for example, a request for invoking a service of the host application 11 by the virtual machine application 21. The service invocation request intercepted by the message intercepting module 302 may be sent to the execution entity pool switching module 303.

The execution entity pool switching module 303 is configured to: after the message intercepting module 302 intercepts the service invocation request, determine, based on an ID that is of a message channel and that is carried in the service invocation request, information about an execution entity pool 101 in which an execution entity corresponding to the message channel is located; and the execution entity pool management module 301 searches the execution entity pool 101 for the execution entity corresponding to the message channel, and runs the execution entity to provide a corresponding service in response to the service invocation request intercepted by the message intercepting module 302.

Based on the software structure shown in FIG. 3c, the following describes in detail a specific implementation procedure of the communication method provided in embodiments of this application with reference to accompanying drawings.

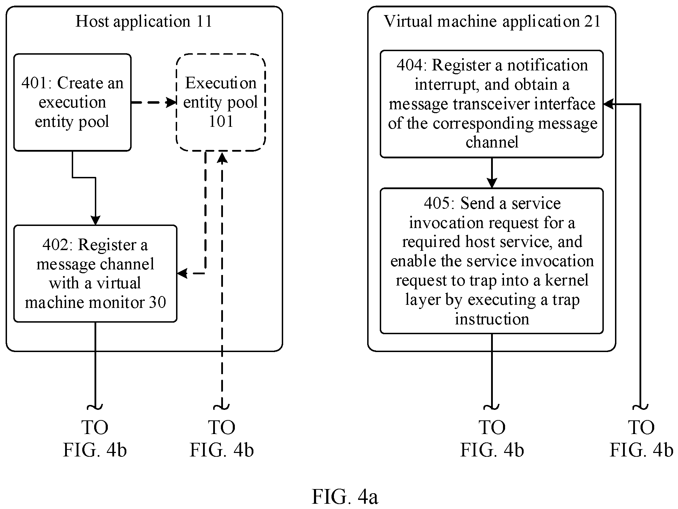

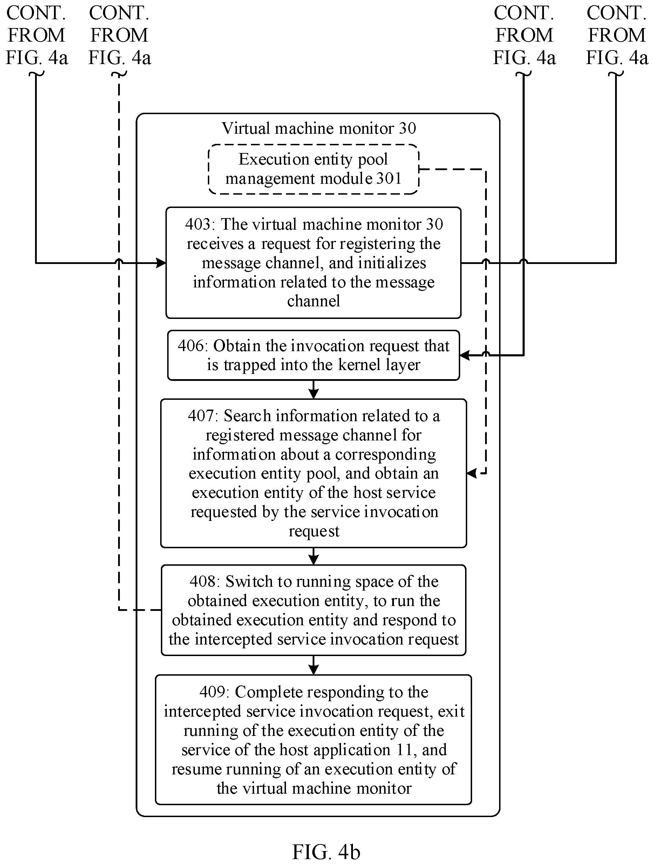

FIG. 4a and FIG. 4b are a diagram of an interaction procedure of a communication method according to an embodiment of this application.

As shown in FIG. 4a and FIG. 4b, the procedure relates to interaction between the host application 11, the virtual machine application 21, and the virtual machine monitor 30 at the kernel layer shown in FIG. 3c.

As shown in FIG. 4a and FIG. 4b, the procedure includes the following steps.

401: The host application 11 creates an execution entity pool.

For example, when the host application 11 is installed at the application layer of the mobile phone 100, the host application 11 may create the execution entity pool of the host application 11. The execution entity pool of the host application 11 may be configured to store and manage execution entities corresponding to function services of the application. It may be understood that, when the execution entities stored in the execution entity pool of the host application 11 are run by the system, the function services of the host application 11 may be correspondingly provided.

The execution entities included in the execution entity pool created by the host application 11 are execution entities of message channels that need to be registered with the virtual machine monitor subsequently. Therefore, a procedure of creating the execution entity pool by the host application 11 may specifically include: (1) allocating a corresponding execution entity to a message channel that is about to be registered, that is, allocating a message channel data object; (2) configuring, for the corresponding execution entity, an ID of the message channel; (3) caching resources; (4) creating, for the message channel that is about to be registered, a kernel object that can run the corresponding execution entity at the kernel layer, that is, creating a message channel kernel object; (5) storing a message channel processing function address and message channel processing function address space for the message channel that is about to be registered, that is, storing the message channel processing function address and the message channel processing function address space; (6) setting related system statuses for execution entities to perform corresponding processing when the execution entities are requested in the message channels, that is, related system statuses for requesting processing; and (7) storing execution context information corresponding to the message channel that is about to be registered. This is not limited herein.

It may be understood that information, such as (1) to (7), that is related to the message channel and that is correspondingly set for the execution entities when the execution entity pool is created may be updated to corresponding management space allocated by the virtual machine monitor 30 when step 403 is performed below. Details are described below, but are not described herein.

402: The host application 11 registers the message channel with the virtual machine monitor 30.

For example, after creating the execution entity pool, the host application 11 may send, to the virtual machine monitor 30 via the message channel registration module 102, information about the execution entity pool of the application, storage paths of the execution entities stored in the execution entity pool, and the like, that is, register a message channel that can invoke an execution entity corresponding to a corresponding service. That the host application 11 registers the message channel with the virtual machine monitor 30 means registering, with the virtual machine monitor 30, IDs of message channels corresponding to the execution entities in the execution entity pool, the information about the execution entity pool 101, and the like, so that the message channels corresponding to the execution entities in the execution entity pool 101 are managed in the virtual machine monitor 30 together.

403: The virtual machine monitor 30 receives a request for registering the message channel, and initializes the information related to the message channel. Initializing the information related to the message channel includes setting an ID of the message channel registered by the host application 11, setting a message channel state (for example, an accessible state or an inaccessible state), setting information about registered execution entity pools 101, and the like.

For example, when receiving the request for registering the message channel, the virtual machine monitor 30 may allocate management space for the related information to the message channel that the host application 11 requests to register, and when the virtual machine monitor 30 initializes the information related to the message channel, the management space allocated to the message channel may be used to store a message channel processing function address, execution context information, and the like. The stored execution context information may be used to request processing space for the message channel. The virtual machine monitor 30 may switch to an execution context for running based on the stored message channel processing function address, for example, run or request a corresponding processing function to respond to a corresponding service invocation request.

404: The virtual machine application 21 registers a notification interrupt, and obtains a message transceiver interface of the corresponding message channel.

For example, the virtual machine application 21 running in the virtual machine 20 may register the notification interrupt with the virtual machine monitor 30 via the message channel transceiver module 201. After receiving a request for registering the notification interrupt, the virtual machine monitor 30 registers the notification interrupt for the virtual machine application 21 and feeds back a registration result. When the message channel transceiver module 201 receives the feedback, it indicates that request data for registering the notification interrupt has been processed. The message channel transceiver module 201 may allocate a message transceiver interface to the virtual machine application 21. After obtaining the message transceiver interface, the virtual machine application 21 may initiate an invocation request for a corresponding host service via the message transceiver interface.

It may be understood that the message channel transceiver module 201 in the virtual machine 20 may establish a message channel list, and initialize information such as IDs of message channels in the message channel list, to manage message transceiver interfaces corresponding to the message channels and maintain information such as the IDs of the message channels. When the virtual machine application 21 needs to initiate a service invocation request, the service invocation request may include information such as an ID of a message channel corresponding to an execution entity of a corresponding host service, and the message channel transceiver module 201 may select, based on the ID of the message channel, a corresponding message transceiver interface to send the service invocation request. That is, the virtual machine application 21 may use the message transceiver interface allocated by the message channel transceiver module 201 to implement procedures such as establishing a connection with the corresponding message channel, sending the service invocation request, and receiving requested service data.

It may be understood that information such as the IDs of the message channels in the message channel list may be obtained from the execution entity pool created by the host application 11, or may be obtained from the execution entity pool management module 303 in the virtual machine monitor 30. This is not limited herein. The virtual machine 20 loads the message channel list established in the message channel transceiver module 201, and the message channel list may be used to manage message channels corresponding to execution entities of services of host applications 11 that need to be invoked by the virtual machine 20 together. Details are not described herein again.

405: The virtual machine application 21 sends a service invocation request for a required host service, and enables the service invocation request to trap into the kernel layer by executing a trap instruction. The service invocation request may include information such as an ID of a message channel corresponding to the execution entity of the requested service, to identify a message channel to which the service invocation request is to be sent.

For example, when the virtual machine application 21 needs to request a host service of a host application 11, the virtual machine application 21 may send a corresponding service invocation request to a message channel corresponding to an execution entity of the service of the host application 11. In this case, the virtual machine application 21 may enable the service invocation request sent by the virtual machine application 21 to trap into the virtual machine monitor 30 at the kernel layer by executing a preset trap instruction, for example, an HVC instruction, to invoke the virtual machine monitor 30 at the kernel layer to respond to the service invocation request.

406: The virtual machine monitor 30 obtains the invocation request that is trapped into the kernel layer.

For example, the virtual machine monitor 30 may intercept, for example, via the message intercepting module 302, the service invocation request enabled by the virtual machine application 21 to trap into the kernel layer by executing the trap instruction.

407: The virtual machine monitor 30 searches information related to a registered message channel for information about a corresponding execution entity pool, and obtains the execution entity of the host service requested by the invocation request.

For example, after the message intercepting module 302 of the virtual machine monitor 30 intercepts the service invocation request, the virtual machine monitor 30 may search, for example, via the execution entity pool management module 301, from the information related to the registered message channel based on information such as the ID that is of the message channel and that is carried in the service invocation request, for information about a corresponding execution entity pool 101. The found execution entity pool 101 includes the execution entity corresponding to the message channel to which the service invocation request is to be sent. The information related to the registered message channel is the information that is related to the message channel and that is initialized by the virtual machine monitor 30 after the virtual machine monitor 30 responds to the request of the host application 11 for registering the message channel in step 403. This is not described herein again.

It may be understood that the information related to the message channel includes IDs of message channels and information about execution entity pools 101. An execution entity pool in which the execution entity corresponding to the message channel is located may be determined based on the ID that is of the message channel and that is in the intercepted service invocation request, and then the corresponding execution entity that can respond to the intercept invocation request and that is in the execution entity pool 101 is obtained based on information about the determined execution entity pool 101.

It may be understood that, when the execution entity requested by the intercepted service invocation request is obtained and run by the virtual machine monitor 30, the execution entity pool management module 301 in the virtual machine monitor 30 may delete the ID of the message channel corresponding to the execution entity from the managed message channel list, or may denote the message channel corresponding to the execution entity as inaccessible or being used in the message channel list. This is not limited herein.

408: The virtual machine monitor 30 switches to running space of the obtained execution entity, to run the obtained execution entity and respond to the intercepted invocation request.

For example, after obtaining the execution entity of the requested service of the host application 11, the virtual machine monitor 30 may switch running space in which an execution entity of the virtual machine monitor 30 currently runs to the running space of the obtained execution entity. Switching to the running space of the execution entity to be switched to may be completed, for example, by converting address space, a system status, responded request data, an execution address, and the like that correspond to an execution entity that is running in the virtual machine monitor 30. The execution entity that is of the virtual machine monitor and that is running before the switching may be an execution entity of a monitor service provided by the virtual machine monitor 30, and the monitor service may be, for example, providing a service such as forwarding between applications in different domains. This is not limited herein.

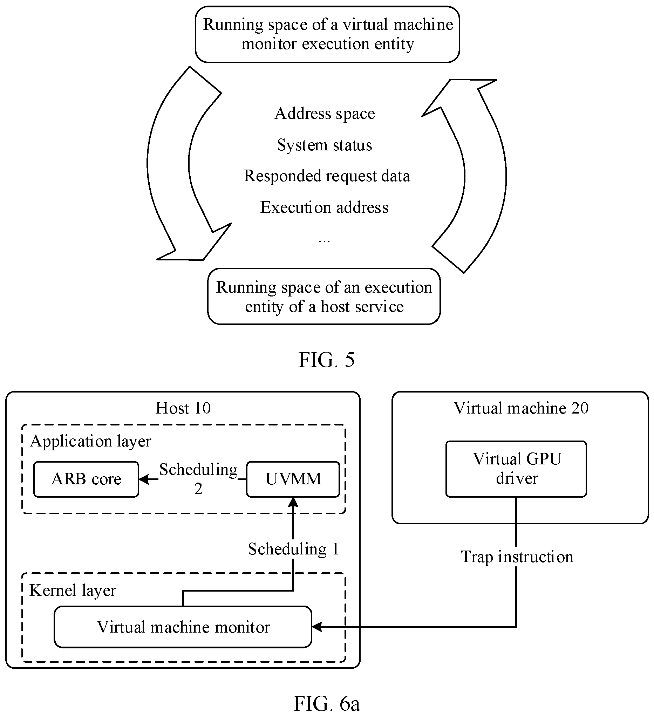

FIG. 5 is a diagram of a switching procedure of switching running space of an execution entity in a virtual machine monitor 30 according to an embodiment of this application.

As shown in FIG. 5, before running space switching, the virtual machine monitor 30 may run an execution entity of the virtual machine monitor 30, to provide monitor services such as forwarding. After the virtual machine monitor 30 obtains the execution entity of the requested service of the host application 11, the virtual machine monitor 30 may switch running space in which the execution entity of the virtual machine monitor 30 currently runs to running space of the obtained execution entity. A running space switching procedure includes: switching (message channel processing function) address space, a system status, and responded request data that correspond to the execution entity of the virtual machine monitor 30 in current running space, an executable code segment address (that is, the execution address shown in FIG. 5) included in the execution entity, and the like to address space, a system status, responded request data, and an execution address that correspond to an execution entity that is of a service (that is, the foregoing host service) of a host application 11 and that needs to be run.

Therefore, it may be understood that, in a running space switching procedure in the virtual machine monitor 30, neither thread switching needs to be performed, nor a process scheduler needs to be invoked. This helps reduce scheduling uncertainty in a procedure of responding to a communication request, and greatly reduces scheduling time.

It may be understood that, in this embodiment of this application, running space of an execution entity is also execution space of a message channel processing function corresponding to the execution entity. The virtual machine monitor 30 may also obtain and execute a corresponding processing function based on a message channel processing function address, address space, and the like corresponding to the execution entity, to run the corresponding execution entity. This is not limited herein.

After completing switching to the running space of the obtained execution entity of the host application 11, the virtual machine monitor 30 may run the execution entity, for example, obtain a corresponding code segment for execution based on an executable code segment address in the execution entity. When the virtual machine monitor 30 runs the obtained execution entity, a corresponding process may provide the service that is of the host application 11 and that corresponds to the execution entity, to respond to the intercepted service invocation request. The response to the service invocation request may include providing corresponding service data.

For example, if a service requested by the service invocation request of the virtual machine application 21 is a service for managing some physical devices on the mobile phone 100, a response to the service invocation request may include querying information about physical devices managed by the service, switching a working state of a queried physical device, and the like. For working state switching, for example, refer to controlling a Wi-Fi device to switch to an enabled state or a disabled state. Details are not described herein again.

409: The virtual machine monitor 30 completes responding to the intercepted service invocation request, exits running of the execution entity of the service of the host application 11, and resumes running of the execution entity of the virtual machine monitor.

For example, after running the obtained execution entity of the host application 11 to complete responding to the invocation request of the corresponding host service, the virtual machine monitor 30 may exit running of the execution entity of the host application 11. In this case, the virtual machine monitor 30 may resume running of the execution entity of the virtual machine monitor 30.

It may be understood that, when the virtual machine monitor 30 exits running of the execution entity of the host application 11, the execution entity pool management module 301 may control recycling of the execution entity, for example, restore, to the message channel list, information such as the ID that is of the message channel corresponding to the execution entity and that is deleted from the message channel list, or switch a state of the message channel corresponding to the execution entity from a running state to an idle state in the managed message channel list for next invocation. This is not limited herein.

In addition, in a procedure in which the virtual machine monitor 30 responds to the service invocation request of the virtual machine application 21, a running state of a virtual CPU (Virtual Central Processing Unit, VCPU) in the virtual machine 20 may be affected. This is because a synchronous communication mechanism or an asynchronous communication mechanism may be used between two running procedures, that is, running of the VCPU and running of the execution entity of the service of the host application 11 by the virtual machine monitor 30.

When the synchronous communication mechanism is used between running of the VCPU and running of the execution entity of the service of the host application 11 by the virtual machine monitor 30, and the virtual machine monitor 30 runs the execution entity of the service of the host application 11, the VCPU in the virtual machine 20 needs to suspend running of the virtual machine application 21. When the virtual machine monitor 30 exits running of the execution entity of the service of the host application 11, the virtual machine monitor 30 needs to store a return value indicating completion of running into message channel processing function address space corresponding to the execution entity, to notify the VCPU of a response result of the service invocation request of the virtual machine application 21, and the VCPU in the virtual machine 20 obtains the response result from the message channel processing function address space, and resumes running of the virtual machine application 21.

When the asynchronous communication mechanism is used between running of the VCPU and running of the execution entity of the service of the host application 11 by the virtual machine monitor 30, whether running of the execution entity of the service of the host application 11 by the virtual machine monitor 30 is completed does not affect running of the VCPU in the virtual machine 20.

In some other embodiments, the service invocation request initiated by the virtual machine application 21 running on the virtual machine 20 may alternatively be, for example, initiated by a virtual driver serving the virtual machine application 21. In this case, the invocation request initiated by the virtual driver may be a request for using a corresponding physical device on the host 10, a request for invoking information about a corresponding physical device on the host 10, or the like. For example, when the virtual machine application 21 running on the virtual machine 20 is a game application, the virtual machine application 21 needs to use a graphics processing unit (Graphics Processing Unit, GPU) to accelerate graphics processing, perform hardware acceleration rendering on a game interface, or the like. In this case, a virtual GPU driver in the virtual machine 20 may send a request for invoking a physical GPU to the operating system running on the host 10.

However, in a virtualization system to which the communication method provided in embodiments of this application is applied, to avoid a conflict between requesting to drive a corresponding physical device by a virtual driver in the virtual machine 20 and requesting to drive the corresponding physical device by an actual driver in the host 10, an execution entity of a corresponding service of an arbitration module may be installed on the host 10, to respond to an invocation request from the virtual driver in the virtual machine 20.

The following uses an example in which the virtual driver in the virtual machine 20 is a virtual GPU driver and the arbitration module is an arbitration core (Arbitration Core, ARB Core) to describe a specific procedure in which the ARB core responds to the invocation request of the virtual GPU driver by implementing the communication method provided in embodiments of this application. The arbitration service that is of ARB core and that is in response to the invocation request of the virtual GPU driver may be, for example, determining, for the invocation request, whether to suspend a processing task that is being executed by a physical GPU and that is on the operating system running on the host 10, and executing a processing task requested by a virtual GPU. This is not limited herein.

It may be understood that the virtual GPU driver in the virtual machine 20 may provide a driver service for the virtual machine application 21 running on the virtual machine 20, to drive the physical GPU on the host 10 to execute a corresponding image data processing task. The virtual GPU driver in the virtual machine 20 and a GPU driver in the operating system running on the host 10 may execute a same driver and have a same driver function.

In a current virtualization system, a virtual GPU obtained through virtualization based on a physical GPU may be displayed in the virtual machine 20, a virtual GPU driver may initiate an invocation request to the virtual GPU, and a right to use the physical GPU may be determined by the ARB core. That is, the ARB core may determine to allocate the right to use the physical GPU to the operating system running on the host 10 or the virtual machine 20. When the ARB core allocates the right to use the physical GPU to the operating system running on the host 10, the physical GPU receives only a processing request such as a rendering task on the operating system running on the host 10. Similarly, when the ARB core allocates the right to use the physical GPU to the virtual machine 20, the physical GPU receives only a processing request such as a rendering task on the virtual machine 20. The invocation request on the virtual machine 20 may be forwarded by a user space virtual machine monitor (Userspace Virtual Machine Monitor, UVMM) to the ARB core for arbitration, and the ARB core may notify the UVMM of forwarding a decision result made by the ARB core after the ARB core receives the invocation request forwarded by the UVMM. These communication procedures relate to scheduling.

Refer to a cross-domain communication procedure implemented based on an inter-process communication (IPC) mechanism of an existing migration thread model shown in FIG. 6a. After a cross-domain invocation request initiated by a virtual GPU driver in the virtual machine 20 is trapped into the kernel layer, the virtual machine monitor 30 at the kernel layer needs to forward the request via the UVMM located on the host 10. The communication procedure relates to scheduling. Refer to scheduling 1 and scheduling 2 shown in FIG. 6a. Only the operating system running on the host 10 can switch to a process in which the ARB core is located for running, or notify the ARB core to elastically create a corresponding execution entity and return the execution entity to the virtual machine monitor 30 for running. In this way, in the cross-domain communication procedure shown in FIG. 6a, a request needs to be forwarded by the UVMM, and this IPC communication manner relates to a scheduling procedure in which a long delay may still be generated.

However, in a virtualization system implemented based on the communication method provided in embodiments of this application, an invocation request on the virtual machine 20 may be responded by running a corresponding execution entity of the ARB core by the virtual machine monitor 30 at the kernel layer of the operating system running on the host 10, and scheduling is not performed.

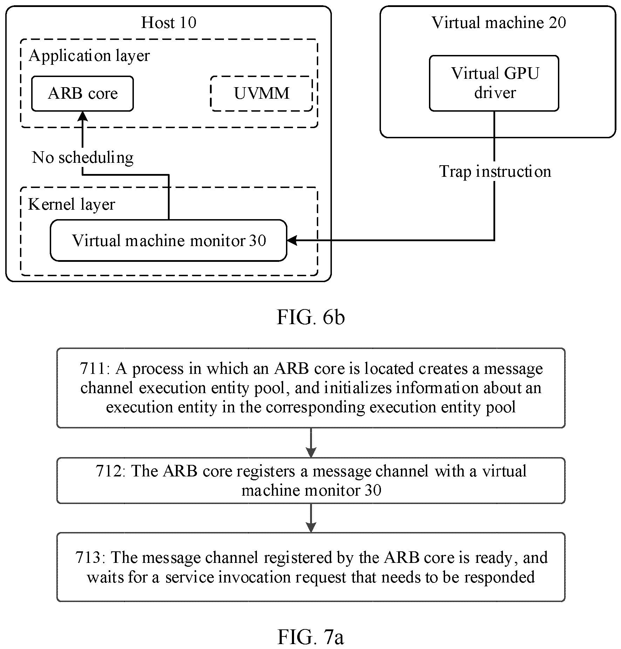

Refer to FIG. 6b. According to the communication method provided in embodiments of this application, (1) the ARB core installed on the operating system running on the host 10 may create an execution entity pool of the ARB core by using a migration thread model, and register information about the execution entity pool with the virtual machine monitor 30; and (2) for the invocation request of the virtual GPU driver, the virtual machine monitor 30 at the kernel layer searches for an execution entity that provides an arbitration service and that is in the execution entity pool registered by the ARB core, and runs the execution entity to directly respond to the invocation request. In other words, according to the communication method provided in embodiments of this application, the virtual machine monitor 30 may directly switch, at the kernel layer, to the execution entity of the ARB core for running, to respond to the invocation request of the virtual GPU driver.

In this way, IPC communication scheduling used in a procedure of forwarding a request via the UVMM can be avoided, a delay caused by scheduling can be reduced, and a speed of responding to the invocation request of the GPU driver can be improved.

In the cross-domain communication procedure shown in FIG. 6a, a specific interaction implementation procedure between the ARB core in the operating system running on the host 10, the virtual GPU driver in the virtual machine 20, and the virtual machine monitor 30 at the kernel layer is described below with reference to procedures shown in FIG. 7a to FIG. 7c.

FIG. 7a is a diagram of a cross-domain communication preparation procedure executed by the ARB core running in the operating system of the host 10 in an implementation procedure of a communication method according to an embodiment of this application.

As shown in FIG. 7a, the cross-domain communication preparation procedure executed by the ARB core running in the operating system of the host 10 may include the following steps.

711: A process in which the ARB core is located creates an execution entity pool, and initializes information about an execution entity in the corresponding execution entity pool.

For example, for running of the process in which the ARB core in the operating system running on the host 10 is located, the execution entity pool may be created by using an existing migration thread model, and the created execution entity pool includes an execution entity that is of the ARB core and that provides an arbitration/decision service.

With reference to related descriptions in step 401, a procedure of creating the execution entity pool by the process in which the ARB core is located may also specifically include: (1) allocating a message channel data object; (2) configuring an ID of a message channel; (3) caching resources; (4) creating a message channel kernel object; (5) storing a message channel processing function address and message channel processing function address space; (6) configuring related system statuses for requesting processing; (7) storing execution context information; and the like. For details, refer to related descriptions in step 401. Details are not described herein again.

712: The ARB core registers a message channel with the virtual machine monitor 30.

For example, the ARB core registers the message channel with the virtual machine monitor 30, including registering an ID of a message channel corresponding to the execution entity that provides the arbitration service and that is of the ARB core, information about the execution entity pool of the ARB core, and the like with the virtual machine monitor 30. For details, refer to related descriptions in step 402. Details are not described herein again.

When receiving a request for registering the message channel by the ARB core, the virtual machine monitor 30 may allocate information management space for the message channel, to store the message channel processing function address, the execution context information, and the like. For details, refer to related descriptions in step 403. Details are not described herein again.

713: The message channel registered by the ARB core is ready, and waits for a service invocation request that needs to be responded.

For example, after the virtual machine monitor 30 completes registration of the message channel in step 712, the message channel that is registered by the ARB core and that corresponds to the execution entity providing the arbitration service is ready, and waits for a service invocation request that needs to invoke the arbitration service.

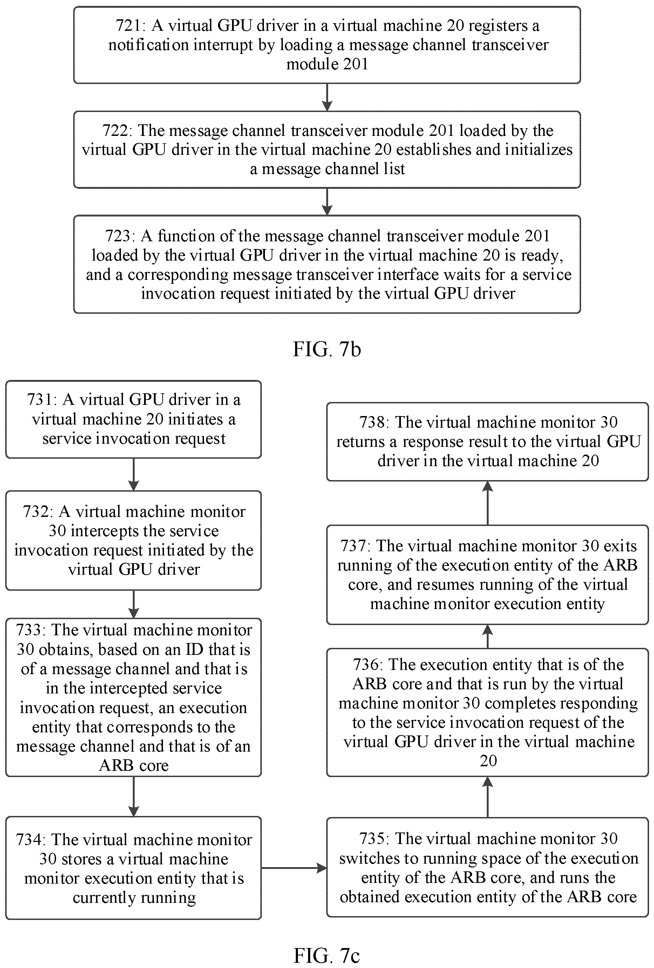

FIG. 7b is a diagram of a cross-domain communication preparation procedure executed by the virtual GPU driver in the virtual machine 20 in an implementation procedure of a communication method according to an embodiment of this application.

As shown in FIG. 7b, in a procedure in which the virtual GPU driver in the virtual machine 20 serves the virtual machine application 21, the preparation procedure performed by the virtual GPU driver for a cross-domain communication procedure to be participated in may include the following steps.

721: The virtual GPU driver in the virtual machine 20 registers a notification interrupt by loading the message channel transceiver module 201.

For example, the message channel transceiver module 201 loaded by the virtual machine 20 may register the notification interrupt with the registered virtual machine monitor 30 for the virtual GPU driver. After the notification interrupt is registered in the virtual machine monitor 30, the virtual GPU driver in the virtual machine 20 may obtain a message transceiver interface allocated by the message channel transceiver module 201 to the virtual GPU driver in the virtual machine 20. In this case, the virtual GPU driver may implement, via the message transceiver interface, procedures such as establishing a connection to a corresponding message channel, sending a service invocation request, and receiving requested service data. For details, refer to related descriptions in step 404. Details are not described herein again.

722: The message channel transceiver module 201 loaded by the virtual GPU driver in the virtual machine 20 establishes and initializes a message channel list. The message channel list may be used to manage message transceiver interfaces that correspond to message channels and that are provided by the message channel transceiver module 201, and maintain information such as IDs of the message channels. For details, refer to related descriptions in step 404. Details are not described herein again.

723: A function of the message channel transceiver module 201 loaded by the virtual GPU driver in the virtual machine 20 is ready, and a corresponding message transceiver interface waits for the service invocation request initiated by the virtual GPU driver.

FIG. 7c is a diagram of an implementation procedure in which the ARB core running in the operating system of the host 10, the virtual GPU driver in the virtual machine 20, and the virtual machine monitor 30 separately execute steps in an implementation procedure of a communication method according to an embodiment of this application.

As shown in FIG. 7c, the implementation procedure may include the following steps.

731: The virtual GPU driver in the virtual machine 20 initiates a service invocation request. The service invocation request is used to request the ARB core running in the operating system of the host 10 to drive a physical GPU.

For example, the virtual GPU driver in the virtual machine 20 may invoke a message transceiver interface allocated by the message channel transceiver module 201, and initiate the service invocation request based on an ID of a message channel corresponding to a requested execution entity that provides an arbitration service and that is of the ARB core. The service invocation request may include the ID of the message channel corresponding to the foregoing execution entity that provides the arbitration service. The service invocation request is used to send a data request to the ARB core running in the operating system of the host 10, to request to drive the physical GPU on the host 10. For a specific procedure of initiating the service invocation request, refer to related descriptions of sending an invocation request for a required host service in step 405. Details are not described herein again.

732: The virtual machine monitor 30 intercepts the service invocation request initiated by the virtual GPU driver.

For example, when the virtual GPU driver in the virtual machine 20 initiates the service invocation request, the virtual machine 20 may enable the service invocation request to trap into the virtual machine monitor 30 at the kernel layer by executing an HVC trap instruction. The message intercepting module 302 in the virtual machine monitor 30 may intercept the invocation request. For details, refer to related descriptions of intercepting a communication request in step 406. Details are not described herein again.

733: The virtual machine monitor 30 obtains, based on the ID that is of the message channel and that is in the intercepted service invocation request, an execution entity that corresponds to the message channel and that is of the ARB core.

For example, the execution entity pool management module 301 in the virtual machine monitor 30 may search, based on the ID that is of the message channel and that is in the intercepted service invocation request of the virtual GPU driver, for information about an execution entity pool that is of the ARB core and that matches the ID of the message channel, and may obtain, from the found execution entity pool, the execution entity that corresponds to the message channel and that is of the ARB core and that provides the arbitration service. For details, refer to related descriptions in step 407. Details are not described herein again.

734: The virtual machine monitor 30 stores a virtual machine monitor execution entity that is currently running.

For example, after finding the corresponding execution entity that is of the ARB core and that provides the arbitration service, the execution entity pool management module 301 in the virtual machine monitor 30 may send, to the execution entity pool switching module 303 in the virtual machine monitor 30, the corresponding execution entity that is of the ARB core and that provides the arbitration service. The execution entity pool switching module 303 saves a running progress and the like of the virtual machine monitor execution entity that is currently running, to prepare running space in the virtual machine monitor 30 for the execution entity of the ARB core.

735: The virtual machine monitor 30 switches to running space of the execution entity of the ARB core, and runs the obtained execution entity of the ARB core.

For example, after saving data such as the running progress of the virtual machine monitor execution entity that is currently running, the virtual machine monitor 30 may switch the running space to the running space of the execution entity of the ARB core, and run the obtained execution entity of the ARB core. For a specific procedure in which the virtual machine monitor 30 switches to the running space of the execution entity of the ARB core, refer to related descriptions in step 408. Details are not described herein again.

736: The execution entity that is of the ARB core and that is run by the virtual machine monitor 30 completes responding to the service invocation request of the virtual GPU driver in the virtual machine 20. The response includes, for example, determining, based on the service invocation request of the virtual GPU driver, whether to suspend a GPU processing task on the operating system running on the host 10, and driving the physical GPU on the host 10 to execute a GPU processing task corresponding to the service invocation request initiated by the virtual GPU driver.

737: The virtual machine monitor 30 exits running of the execution entity of the ARB core, and resumes running of the virtual machine monitor execution entity.

For example, after the execution entity that is of the ARB core and that is run by the virtual machine monitor 30 completes responding to the service invocation request of the GPU driver in the virtual machine 20, the virtual machine monitor 30 may exit running of the execution entity of the ARB core, switch back to the running space of the virtual machine monitor execution entity, and resume running of the virtual machine monitor execution entity. For specific content executed after the execution entity that is of the ARB core and that is run by the virtual machine monitor 30 completes responding to the service invocation request of the GPU driver in the virtual machine 20, refer to related descriptions of execution content executed after the virtual machine monitor 30 completes responding to the communication request in step 425. Details are not described herein again.

738: The virtual machine monitor 30 returns a response result to the virtual GPU driver in the virtual machine 20.

Based on the implementation procedure shown in FIG. 4a and FIG. 4b and the implementation procedures shown in FIG. 7a to FIG. 7c, it may be found that according to the communication method provided in embodiments of this application, the operating system running on the host 10 in the electronic device such as the mobile phone 100 can quickly respond to the service invocation request of the virtual machine 20 via the virtual machine monitor 30 at the kernel layer. This helps eliminate uncertainty of scheduling a message channel, reduces scheduling time, simplifies a message reporting procedure, and better supports cross-domain communication on the electronic device such as the mobile phone 100.

As an example, for a procedure in which the ARB core running in the operating system of the host 10 shown in FIG. 7c quickly responds, via the virtual machine monitor 30 at the kernel layer, to the service invocation request initiated by the virtual GPU driver in the virtual machine 20, experimental data obtained through a frame rate test may be used to show that the communication method provided in embodiments of this application has significant beneficial effects in improving a speed of responding to the service invocation request of the virtual GPU driver in the virtual machine 20, and in further improving frame rate stability of a display interface of the virtual machine application 21 such as a game application running in the virtual machine 20.

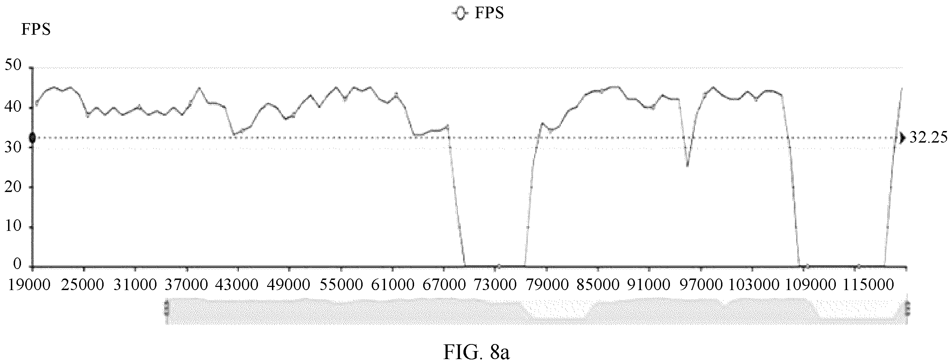

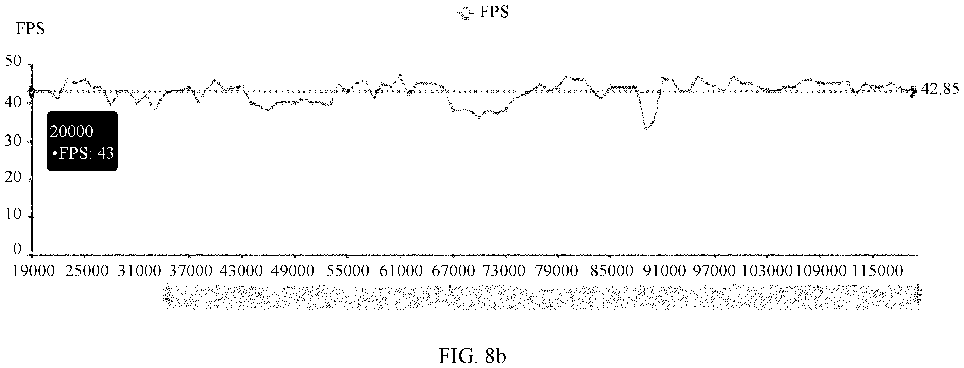

FIG. 8a and FIG. 8b each are a diagram of a frame rate curve obtained by performing a frame rate test in a procedure of running a Riptide GP game on a mobile phone 100 according to an embodiment of this application.

A diagram of a frame rate-time curve shown in FIG. 8a may be obtained by performing a frame rate test during running of a Riptide GP game (a virtual machine application) on a mobile phone 100 to which the communication method provided in embodiments of this application is not applied. As shown in FIG. 8a, in this scenario, a frame rate fluctuates greatly, and obvious frame freezing occurs.

A diagram of a frame rate-time curve shown in FIG. 8b may be obtained by performing a frame rate test during running of the virtual machine application, that is, the Riptide GP game, on a mobile phone 100 to which the communication method provided in embodiments of this application is applied. As shown in FIG. 8b, in this scenario, a frame rate fluctuates slightly, the frame rate is more stable, and there is no obvious frame freezing.

It can be found by comparing FIG. 8a with FIG. 8b that, compared with a procedure in which the Riptide GP game is run on the mobile phone 100 to which the communication method provided in embodiments of this application is not applied, in a procedure in which the virtual machine 20 in the mobile phone 100 to which the communication method provided in embodiments of this application is applied runs the Riptide GP game, a frame rate of a game interface is more stable, and may be relatively stable around 43 fps.

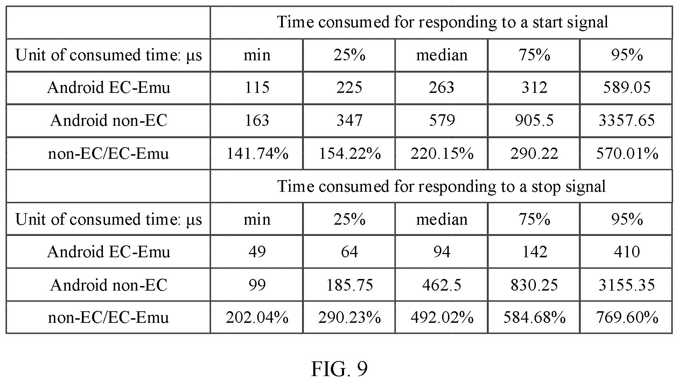

FIG. 9 shows a comparison table of test data of time consumed by a mobile phone 100 to respond to a start/stop signal (that is, the foregoing service invocation request) initiated by the virtual GPU driver in the virtual machine 20 according to an embodiment of this application.

For example, the mobile phone 100 may use, for example, an Emu simulator, to test time consumed for responding to the start (start) signal and the stop (stop) signal of the virtual GPU driver (which may be described as a guest GPU below) in the virtual machine 20.

As shown in FIG. 9, Android EC-Emu tests time consumed for responding to start and stop signals of a guest GPU corresponding to a mobile phone 100 to which the communication method provided in embodiments of this application is applied; Android non-EC tests time consumed for responding to start and stop signals of a guest GPU corresponding to a mobile phone 100 to which the communication method provided in embodiments of this application is not applied; and non-EC/EC-Emu indicates a ratio of the time consumed for responding to the start and stop signals of the guest GPU in the mobile phone 100 to which the communication method provided in embodiments of this application is not applied to the time consumed for responding to the start and stop signals of the guest GPU in the mobile phone 100 to which the communication method provided in embodiments of this application is applied.

It may be understood that a time consumption test may be performed on several groups of communication data. For example, several response time consumption tests are performed on consumed duration from time when a start/stop signal (that is, the foregoing data request) is sent by a guest GPU to time when the virtual machine monitor 30 runs the execution entity of the ARB core to complete a response, and consumed time obtained through the test is a response delay of the start/stop signal in test data. A comparison table of signal response time consumption shown in FIG. 9 may be obtained by sorting, in ascending order, time that is for responding to the start/stop signal and that correspond to test data, and marking consumed time corresponding to first test data (that is, min, minimum consumed time), maximum consumed time in first 25% of the test data, consumed time of median (median) test data, maximum consumed time in first 75% of the test data, and maximum consumed time in first 95% of the test data.

Values of the test data shown in FIG. 9 are consumed time in a part of test data in several times of test data that is obtained through analysis based on experimental data and that facilitates analysis of a value rule. As an example, if a quantity of test times or an amount of test data is 100, 95% indicates consumed time corresponding to test data ranked at 95 in a time consumption ranking result; and if a quantity of test times or an amount of test data is 500, 95% indicates consumed time corresponding to test data ranked at 475 in a time consumption ranking result. This is not limited herein.

As shown in FIG. 9, for the start signal, minimum consumed time in Android EC-Emu time consumption test data is 115 µs, and minimum consumed time in Android non-EC time consumption test data is 163 µs. Correspondingly, a ratio of minimum consumed time is: that is, a value of non-EC/EC-Emu is 141.74%. That is, minimum time consumed for responding to the start signal in the Android non-EC time consumption test data is 1.4 times minimum time consumed for responding to the start signal in the Android EC-Emu time consumption test data.

As shown in FIG. 9, for the stop signal, minimum consumed time in the Android EC-Emu time consumption test data is 49 µs, and minimum consumed time in the Android non-EC time consumption test data is 99 µs. Correspondingly, a ratio of minimum consumed time is: that is, a value of non-EC/EC-Emu is 202.04%. That is, minimum time consumed for responding to the stop signal in the Android non-EC time consumption test data is twice minimum time consumed for responding to the stop signal in the Android EC-Emu time consumption test data.

As shown in FIG. 9, for maximum consumed time in first 95% times of test data, time consumed for responding to the start signal in the Android non-EC time consumption test data is 5.7 times time consumed for responding to the start signal in the Android EC-Emu time consumption test data, and time consumed for responding to the stop signal in the Android non-EC time consumption test data is 7.6 times time consumed for responding to the stop signal in the Android EC-Emu time consumption test data.

Therefore, by comparing the Android EC-Emu time consumption test data with the Android non-EC time consumption test data shown in FIG. 9, it can be learned that according to the communication method provided in embodiments of this application, a speed of responding to the start/stop signal of the GPU in the virtual machine 20 running on the electronic device such as the mobile phone 100, GPU performance, and the like can be significantly improved.

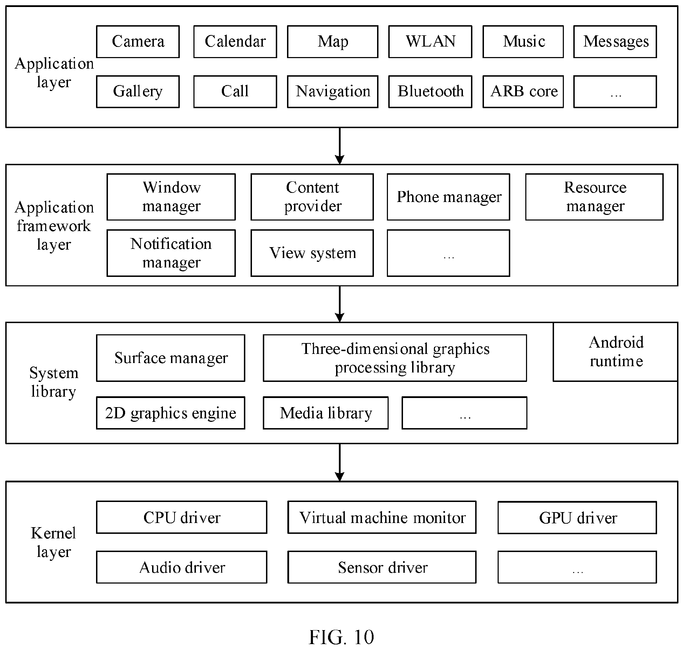

FIG. 10 is a diagram of an architecture of an operating system installed on a mobile phone 100 according to an embodiment of this application.

In this embodiment of this application, the operating system installed on the mobile phone 100 runs on the host 10, the virtual machine 20 correspondingly runs at the application layer of the operating system, and the virtual machine 20 may also run the virtual machine application 21 by using a system architecture shown in FIG. 10, and serve the virtual machine application 21 via a virtual GPU driver.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

In a layered architecture, software is divided into several layers, and each layer has a clear role and task. The layers communicate with each other through a software interface. In some embodiments, the Android system is divided into four layers: an application layer, an application framework layer, Android runtime (Android runtime) and a system library, and a kernel layer.

As shown in FIG. 10, the application layer may include a series of application packages. The application packages may include applications such as Camera, Gallery, Calendar, Call, Map, Navigation, WLAN, Bluetooth, Music, and Messages, and may further include the foregoing ARB core. It may be understood that, in this embodiment of this application, applications running in the operating system running on the host 10 may be referred to as the foregoing host applications 11, and applications running in a system of the virtual machine 20 is the foregoing virtual machine applications 21.

The application framework layer provides an application programming interface (application programming interface, API) and a programming framework for the applications in the application layer. The application framework layer includes some predefined functions.

As shown in FIG. 10, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to: store and obtain data, and enable the data to be accessed by an application. The data may include a video, an image, audio, dialed and answered calls, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without user interaction. For example, the notification manager is configured for download completion notification, message notification, and the like. The notification manager may alternatively be a notification that appears in a top status bar of the system in a form of a graph or a scroll bar text, for example, a notification of an application running in the background, or may be a notification that appears on a screen in a form of a dialog window. For example, text information is displayed in the status bar, an alert sound is given, the electronic device vibrates, or an indicator light blinks.

The Android runtime includes a kernel library and a virtual machine. The Android runtime is responsible for scheduling and management of the Android system. The kernel library includes two parts: a function that needs to be invoked in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a CPU driver, a GPU driver, an audio driver, a sensor driver, and a virtual machine monitor. In this embodiment of this application, the GPU driver in the operating system running on the host 10 may directly request to drive a GPU physical device, that is, an actual GPU physical device, on the host 10. The GPU driver in the system of the virtual machine 20 may drive a VGPU in the virtual machine 20 to map and drive the actual GPU physical device.

Reference to "one embodiment" or "an embodiment" in the specification means that specific features, structures, or characteristics described with reference to embodiments are included in at least one example implementation solution or technology disclosed according to embodiments of this application. The phrase "in one embodiment" appearing in various places in the specification does not necessarily all mean a same embodiment.

The disclosure of embodiments of this application further relates to an apparatus for performing an operation in the specification. The apparatus may be constructed dedicatedly for required purposes, or may include a general-purpose computer selectively activated or reconfigured by a computer program stored in a computer. Such a computer program may be stored in a computer-readable medium, such as but not limited to, any type of disk, including a floppy disk, an optical disc, a CD-ROM, a magneto-optical disk, a read only memory (ROM), a random access memory (RAM), an EPROM, an EEPROM, a magnetic or optical card, an application-specific integrated circuit (ASIC), and any type of medium suitable for storing electronic instructions. In addition, each of them may be coupled to a computer system bus. Moreover, the computer mentioned in the specification may include a single processor or may be an architecture using a plurality of processors for increased computing capabilities.

In addition, the language used in the specification has been principally selected for readability and instructional purposes and may not be selected to depict or limit the disclosed topics. Therefore, embodiments of this application are disclosed to illustrate rather than limit the scope of the concepts discussed herein.

## Claims

1. A communication method, applied to an electronic device, wherein a first operating system and a second operating system are installed on the electronic device, the second operating system comprises an execution environment management module, and the execution environment management module can communicate with the first operating system and the second operating system; and
the method comprises:
obtaining, by the execution environment management module, a service invocation request of the first operating system, wherein the service invocation request is used to request to invoke a first service of a first application running in the second operating system;
obtaining, by the execution environment management module in response to the service invocation request, a first storage path of a first execution entity corresponding to the first service; and
obtaining, by the execution environment management module, the first execution entity based on the first storage path, and running the first execution entity.

2. The method according to claim 1, wherein the first operating system comprises a virtual machine, and the execution environment management module comprises a virtual machine monitor.

3. The method according to claim 2, wherein the second operating system is a primary operating system of the electronic device, and the execution environment management module is located at a kernel layer of the second operating system.

4. The method according to claim 3, wherein the electronic device comprises a trap instruction, and the obtaining, by the execution environment management module, a service invocation request of the first operating system comprises:
running, by the first operating system, the trap instruction, to enable the service invocation request to trap into the kernel layer of the second operating system; and
obtaining, by the execution environment management module, the service invocation request that is trapped into the kernel layer.

5. The method according to claim 4, wherein the obtaining, by the execution environment management module, a service invocation request of the first operating system further comprises:
sending, by the first operating system, an interrupt instruction to the execution environment management module when running the trap instruction; and
interrupting, by the execution environment management module according to the received interrupt instruction, a task that is being executed, and switching to processing the obtained service invocation request.

6. The method according to claim 1, wherein the execution environment management module stores a first correspondence between the first service and the first storage path; and
the obtaining, by the execution environment management module in response to the service invocation request, a first storage path of a first execution entity corresponding to the first service comprises:
obtaining, by the execution environment management module according to the first correspondence, the first storage path of the first execution entity corresponding to the first service.

7. The method according to claim 6, wherein the first correspondence is stored in the execution environment management module in the following manner:
when the first application is installed, the first application creates the first execution entity corresponding to the first service;
the first application provides the execution environment management module with the first storage path of the first execution entity and a second correspondence between the first service and the first execution entity; and
the execution environment management module determines and stores, based on the first storage path of the first execution entity and according to the second correspondence, the first correspondence between the first service and the first storage path.

8. The method according to claim 7, wherein the electronic device comprises first memory space for storing the first execution entity, and the first memory space is obtained in the following manner:
when the first application is installed at an application layer of the second operating system, the first application requests the first memory space from the second operating system; and
the second operating system allocates the first memory space to the first application in response to the created request.

9. The method according to any one of claims 1 to 8, wherein the first execution entity comprises at least:
register information corresponding to a process running the first application, context data of the process, an executable code segment address corresponding to the first service, and a stack address.

10. An electronic device, comprising one or more processors and one or more memories, wherein the one or more memories store one or more programs, and when the one or more programs are executed by the one or more processors, the electronic device is enabled to perform the communication method according to any one of claims 1 to 9.

11. A computer-readable storage medium, wherein the storage medium stores instructions, and when the instructions are executed on a computer, the computer is enabled to perform the communication method according to any one of claims 1 to 9.

12. A computer program product, comprising a computer program/instructions, wherein when the computer program/instructions is/are executed by a processor, the computer program/instructions is/are used to implement the communication method according to any one of claims 1 to 9.
